# EUROPEAN PATENT APPLICATION

(11) **EP 2 477 267 A1**
(43) Date of publication of application: **18.07.2012**
(21) Application number: 11195120.8
(22) Date of filing: 22.12.2011
(51) Int. Cl.: H01M 10/04, H01M 10/0565, H01M 2/02, H01M 4/02

(54) **Secondary battery and method of manufacture**

(30) Priority: 14.01.2011 US 201113432898; 12.12.2011 US 201113323109
(71) Applicant: Samsung SDI Co., Ltd., Yongin-si, Gyeonggi-do (KR)
(72) Inventor: Lee, Seung-Hun, Gyeonggi-do (KR); Lee, Sang-Ho, Gyeonggi-do (KR)
(74) Representative: Walaski, Jan Filip

(57) **Abstract**

A secondary battery comprises a wound electrode assembly that comprises a positive electrode, a negative electrode and a separator wound together around a winding axis, a case for accommodating the electrode assembly and an electrolyte and first and second electrode tabs respectively formed on one end of the positive electrode and on one end of the negative electrode, wherein the case and the electrode assembly are curved in a winding direction of the electrode assembly, and the first and second electrode tabs extend from the respective ends of the positive and negative electrodes in a direction that is generally perpendicular to the winding axis of the electrode assembly.

## Description

The present invention relates to a secondary battery and a method of manufacturing the same.

A lithium secondary battery having high output and high energy density is being developed as a power supply of portable electronic devices.

Recently, there is a demand for smaller and lighter portable electronic devices. Thus, a smaller and lighter secondary battery is also needed for electronic devices using the secondary battery.

An aspect of the present invention is to provide a secondary battery which efficiently uses a space where the secondary battery is accommodated based on an external appearance of an electronic device using the secondary battery as a power supply.

Another aspect of the present invention is to provide a secondary battery having a curved shape to be stably installed in an electronic device even though the electronic device has a curved external appearance. Thus, the secondary battery does not move but is stably fixed in the electronic device.

Still another aspect of the present invention is to provide a secondary battery which is smoothly curved so that an electrode assembly of the secondary battery is not broken.

According to an aspect of the present invention, there is provided a secondary battery comprising a wound electrode assembly that comprises a positive electrode a negative electrode and a separator wound together around a winding axis, a case for accommodating the electrode assembly and an electrolyte and first and second electrode tabs respectively formed on one end of the positive electrode and on one end of the negative electrode, wherein the case and the electrode assembly are curved in a winding direction of the electrode assembly, and the first and second electrode tabs extend from the respective ends of the positive and negative electrodes in a direction that is generally perpendicular to the winding axis of the electrode assembly.

The first and second electrode tabs may lie along the curved path formed by the curvature of the case and the electrode assembly.

The wound electrode assembly may comprise first and second ends spaced apart from each other along the winding axis and first and second sides spaced apart from each other along a line perpendicular to the winding axis, each of the first and second ends exposing edges of the positive and negative electrodes, wherein the electrode assembly is curved between the first and second sides.

The case may comprise a pouch, which may comprise a body and a cover, the electrode tabs protruding between the body and the cover, wherein the cover and the electrode tabs form a substantially continuous curved path to permit the battery to be mounted to a corresponding curved surface of an external device.

The case may comprise a can having an opening at one end to receive the electrode assembly and a cap assembly for sealing the opening, wherein the first and second ends of the electrode assembly face the sides of the can.

The first and second electrode tabs may extending from a side of the electrode assembly may be connected to the cap assembly.

According to another aspect of the invention, there is further provided a method of manufacturing a secondary battery, comprising inserting a wound electrode assembly into a case, the wound electrode assembly comprising a positive electrode, a negative electrode and a separator disposed between the positive and negative electrodes, wherein first and second electrode tabs are respectively formed on one end of the positive electrode and on one end of the negative electrode and the first and second electrode tabs extend from the respective ends of the positive and negative electrodes in a direction that is perpendicular to the winding axis of the electrode assembly and bending the case and the electrode assembly in a winding direction of the electrode assembly.

Where the case comprises a pouch, the method may further comprise providing a prepolymer in the pouch, bending the pouch and the electrode assembly and thermally hardening the prepolymer, whereby the prepolymer forms a polymer gel as a solid electrolyte.

The method may comprise bending the case by pressing the case including the electrode assembly while heating to a predetermined temperature.

The method may further comprise forming the electrode assembly by providing elongate positive and negative electrode plates, forming respective first and second electrode tabs at one end of the positive and negative electrode plates, the electrode tabs extending longitudinally from the ends of the plates and winding the positive and negative electrode plates with the separator about the winding axis such that the electrode tabs protrude beyond a side of the electrode assembly.

As described above, according to exemplary embodiments of the present invention, when a secondary battery is mounted in an electronic device having a curved shape, an inside space of the electronic device is efficiently used to allow the electronic device to be smaller and lighter.

According to exemplary embodiments of the present invention, when a secondary battery is suitably mounted corresponding to an electronic device having a curved external shape, the secondary battery is not easily moved by external impact, so as to be stably used.

According to exemplary embodiments of the present invention, even though an electrode assembly accommodated in a secondary battery is curved the same as the secondary battery, electrode plates of the electrode assembly may be securely formed without being broken or damaged.

The accompanying drawings, together with the specification, illustrate exemplary embodiments of the present invention, and, together with the description, serve to explain the principles of the present invention.
FIG. 1 is an exploded view of an electrode assembly according to an exemplary embodiment of the present invention;
FIG. 2 schematically illustrates a process of forming an electrode assembly according to an exemplary embodiment of the present invention;
FIG. 3A is a perspective view of the electrode assembly wound in FIG. 2;
FIG. 3B is a lateral view of the electrode assembly of FIG. 3A;
FIG. 4 is a perspective of the electrode assembly and a battery case to accommodate the electrode assembly according to the exemplary embodiment of the present invention;
FIG. 5 is a perspective view of a secondary battery before having a curved shape according to an exemplary embodiment of the present invention;
FIG. 6 is a projection view of a lateral side of the pouch-type secondary battery having a curved cross section vertical to a winding axis according to the exemplary embodiment of the present invention;
FIG. 7 is an exploded view of an electrode assembly and a battery case accommodating the electrode assembly according to another exemplary embodiment of the present invention;
FIG. 8 is a perspective view of a secondary battery before having a curved shape according to the embodiment shown in Figure 7; and
FIG. 9 is a lateral view of the secondary battery of Figure 7 having a curved cross section vertical to a winding axis.

Reference will now be made in detail to exemplary embodiments of the present invention, examples of which are illustrated in the accompanying drawings, wherein like reference numerals refer to like elements throughout. The embodiments are described below in order to explain the present invention by referring to the figures. This invention may, however, be embodied in many different forms and should not be construed as limited to the exemplary embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

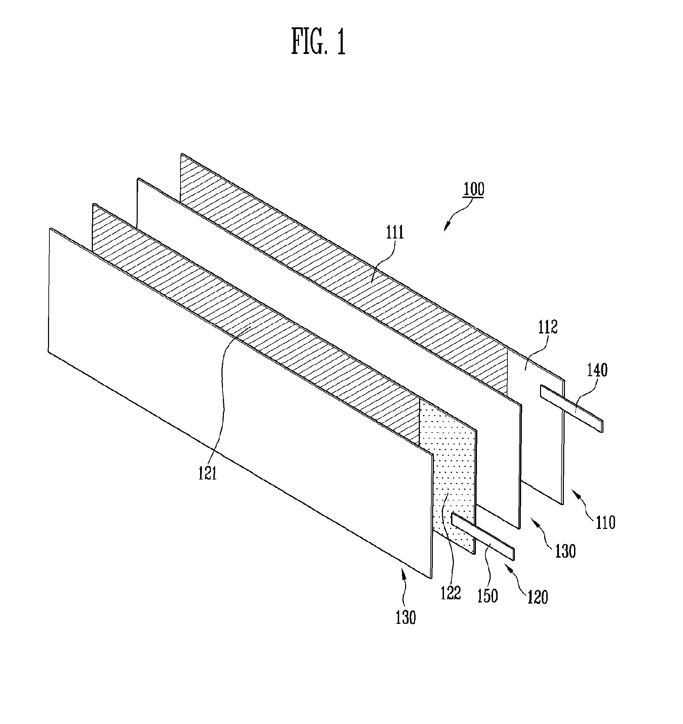

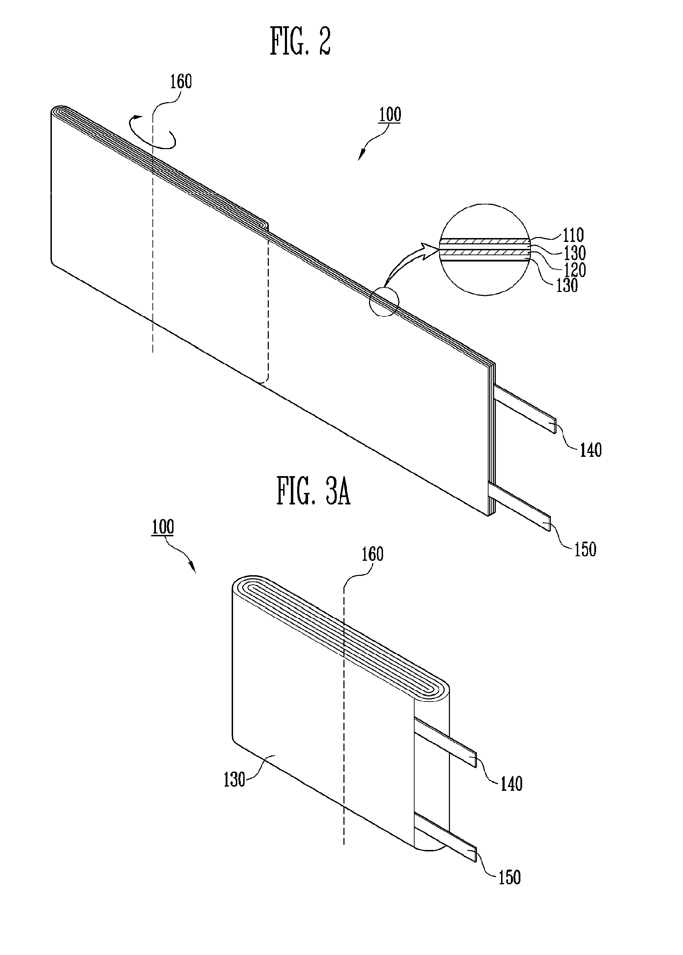

FIG. 1 is an exploded view of an electrode assembly according to an exemplary embodiment of the present invention, and FIG. 2 schematically illustrates a process of forming an electrode assembly by winding a first plate, a second plate, and a separator.

The electrode assembly 100 includes a positive plate 110, a negative plate 120, and a separator 130.

The positive plate 110 and the negative plate 120 are electrically connected directly to an outside via a first electrode tab 140 and a second electrode tab 150 being respectively attached to the positive plate 110 and the negative plate 120, or are electrically connected to the outside through a separate electrode lead (not shown).

The positive plate 110 includes a positive active material layer 111 where a positive active material is applied to one or both sides of a positive current collector and a first non-applied part 112 where the positive active material is not applied.

Generally, the positive current collector may include any material which has a high conductivity and does not cause chemical changes. For example, the positive current collector may use aluminum, nickel, titanium, baked carbon, or the like. The positive active material layer 111 may be formed by applying slurry to the positive current collector, the slurry being prepared by mixing the positive active material which is a layered compound including lithium, a conductive material to improve conductivity, and a binder to improve coherence of materials with a solvent.

The negative plate 120 includes a negative active material layer 121 where a negative active material is applied to one or both sides of a negative current collector and a second non-applied part 122 where the negative active material is not applied. Generally, the negative current collector may include a conductive metal plate, for example, copper, stainless steel, aluminum, nickel, or the like. The negative active material layer 121 may be formed by applying slurry to the negative current collector, the slurry being prepared by mixing the negative active material and a binder to improve coherence of the negative active material with a solvent.

The separator 130 is disposed between the positive plate 110 and the negative plate 120. The separator 130 is formed of an insulating thin film having a high ion permeability and a high mechanical strength, functions as a passage of ions, and prevents direct contact of the positive plate 110 with the negative plate 120. For example, the separator 130 may include polyethylene, polypropylene, polyvinylidene fluoride, or the like.

As shown in FIG. 1, the first electrode tab 140 and the second electrode tab 150 may be respectively attached to the first non-applied part 112 of the positive plate 110 and the second non-applied part 122 of the negative plate 120 via at least one process of ultrasonic welding, resistance welding, and laser welding, or may be integrated with the positive plate 110 and the negative plate 120. For example, the first electrode tab 140 and the second electrode tab 150 may be formed of nickel, aluminum, or the like.

Referring to FIG. 2, the electrode assembly 100 is formed by winding the positive plate 110, the negative plate 120, and the separator 130 disposed between the plates based on a winding axis 160. A secondary battery 200 according to exemplary embodiments of the present invention is formed by accommodating the above electrode assembly 100 and an electrolyte in a pouch-type battery case and sealing the battery case.

In the pouch-type secondary battery 200 of the present embodiment, the first electrode tab 140 and the second electrode tab 150 are exposed to the outside of the pouch-type case through a sealing portion of the pouch-type case. The first electrode tab 140 and the second electrode tab 150 function as a traveling passage of electrons generated through a chemical reaction between the plates and the electrolyte and are electrically connected to the outside.

In the present embodiment, the first electrode tab 140 and the second electrode tab 150 extend parallel with a winding direction of the plates. The tabs can alternatively be said to extend perpendicular to the winding axis of the electrode assembly. When the electrode tabs 140 and 150 are formed vertically to the electrode assembly, ie. in parallel with the winding axis, while the secondary battery case accommodating the electrode tabs 140 and 150 and the electrolyte is curved in the winding direction of the electrode assembly, the electrode tabs 140 and 150, the positive plate 110, and the negative plate 120 are deformatively curved to cause damage to the positive plate 100 and the negative plate 120, or the electrode tabs 140 and 150.

Thus, as clearly shown in Figure 3A, the electrode tabs 140 and 150 are arranged to extend perpendicular to the winding axis of the electrode assembly, so that they extend from the side of the electrode assembly. The tabs may be integrated or separately attached.

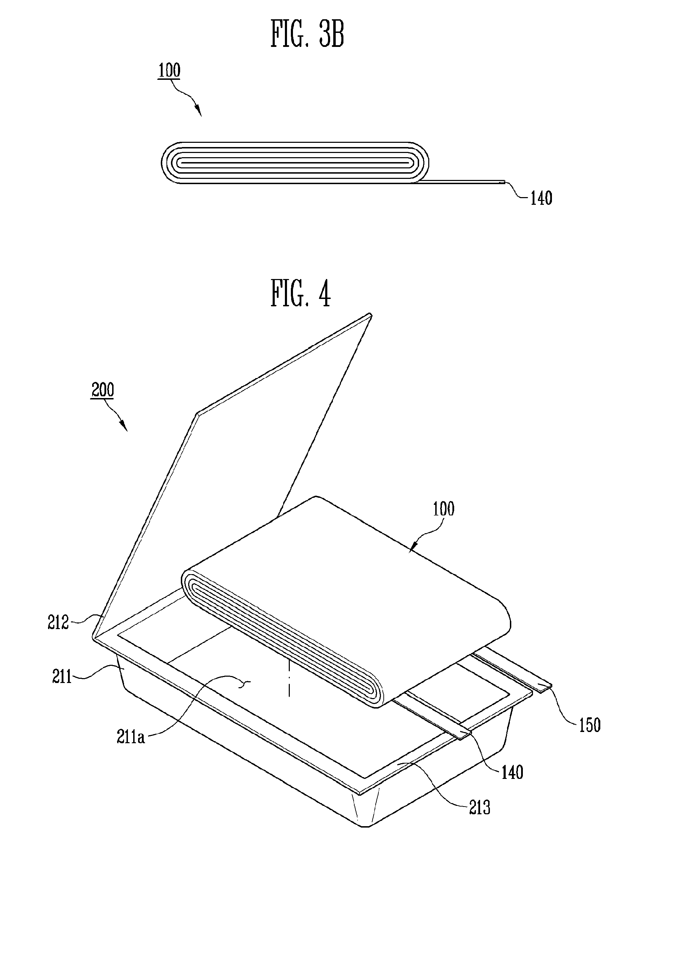

FIG. 3A is a perspective view of the electrode assembly wound in FIG. 2, and FIG. 3B is a lateral view of the electrode assembly of FIG. 3A.

Referring to FIGS. 3A and 3B, the electrode assembly 100 is formed by winding the positive plate 110, the separator 130, and the negative plate 120 in a predetermined width based on the winding axis 160. In FIG. 3A, the first electrode tab 140 and the second electrode tab 150 attached to the positive plate 110 and the negative plate 120 are exposed to the outside through an outermost side of the wound electrode assembly 100 and extend parallel with the winding direction (perpendicular to the winding axis). Further, as shown in FIG. 3B, the electrode assembly 100 may have an oval cross section.

FIG. 4 is a perspective of the electrode assembly of FIG. 3 and a battery case to accommodate the electrode assembly.

Referring to FIG. 4, the electrode assembly 100 is accommodated along with an electrolyte in a battery case 210. The electrolyte uses a solution prepared by dissolving lithium salts, such as LiPF₆ and LiBF₄, and various additives in an organic solvent. In the present embodiment, a useful electrolyte dissolves sufficient amount of lithium salts and has a low viscosity. In particular, the electrolyte is inactive on a surface of the positive plate 110 and the negative plate 120 in charging and discharging of the secondary battery. For example, materials of the electrolyte may include at least one of ethylene carbonate (EC), propylene carbonate (PC), dimethyl carbonate (DMC), Diethyl Carbonate (DEC), and ethyl methyl carbonate (EMC).

Further, according to the exemplary embodiments of the present invention, in addition to the above organic solvent, the electrolyte may also use polymer gel as a solid electrolyte. The electrolyte using the polymer gel has a high boiling point to be stable against combustion and to prevent the electrolyte from leaking. Example materials of the polymer gel may include at least one of polyethylene glycol (PEG), polyacrylonitrile (PAN), polymethylmethacrylate (PMMA), and polyvinyldifluoride (PVDF).

The polymer gel may be formed by a gelation of a prepolymer. The prepolymer refers to a precursor of a polymer, and the polymer gel may be formed by accommodating the prepolymer in the battery case and heating the battery case accommodating the prepolymer.

When the electrolyte uses the above polymer gel, the secondary battery case accommodating the electrode assembly and the electrolyte is curved in a direction parallel with the winding direction of the electrode assembly and then is thermally hardened.

In the exemplary embodiments of the present invention, the battery case 210 is a pouch-type case and includes a body 211 and a cover 212. The secondary battery 200 of the present embodiment is manufactured by disposing the electrode assembly 100 in an accommodating part 211a of the body 211 and thermally sealing a sealing portion 213 with the body 211 and the cover 212 being closely attached to each other.

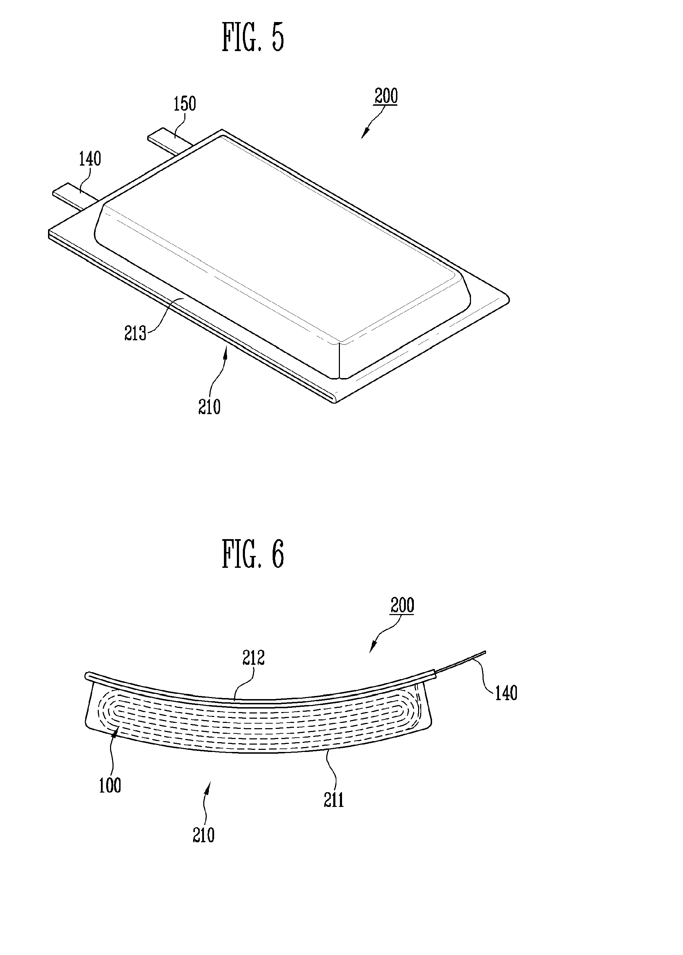

FIG. 5 is a perspective view of the secondary battery where the electrode assembly and the electrolyte are accommodated and sealed before having a curved shape, and

FIG. 6 is a projection view of a lateral side of the pouch-type secondary battery having a curved cross section across the winding axis according to the present embodiment.

Referring to FIG. 5, the pouch-type battery case 210 accommodates the electrode assembly 100 and the electrolyte inside and is sealed through a thermal sealing process or the like. In detail, the sealing portion 213 of the battery case 210 and the cover 212 in contact with the sealing portion 213 are heated at a predetermined temperature or more, being pressed using a pressing jig. Here, the first electrode tab 140 and the second electrode tab 150 are exposed through the sealing portion 213. Further, as shown in FIG. 5, the first electrode tab 140 and the second electrode tab 150 are spaced away from each other.

According to the exemplary embodiments of the present invention, as shown in FIG. 6, in order to have the curved cross section vertical to, or across, the winding axis, curving is performed in the direction parallel with the winding axis of the electrode assembly. In detail, the secondary battery 200 shown in FIG. 5 is a flat shape. When the secondary battery 200 is mounted in a curved part of an electronic device, spatial use is inefficient so preventing the electronic device from being smaller and slimmer. Thus, as shown in FIG. 6, to curve the secondary battery 200, opposite end portions are smoothly curved in the same direction based on the winding axis (refer to FIG. 3A) of the electrode assembly 100 with respect to a central part of a cross section vertical to the winding axis. That is, both of the opposite end portions are curved upwards or downwards based on a horizontal surface with respect to the central part.

As shown in FIG. 6, the secondary battery 200 accommodating the electrode assembly 100 is curved, so that the battery case 210 and the electrode assembly 100 in the battery case 210 are curved the same. A curving direction of the electrode assembly 100 is parallel with the winding direction. As shown in FIG. 6, in the electrode assembly 100, a surface vertical to the first electrode tab 140 and the second electrode tab 150 has a narrow width, whereas a surface horizontal with the electrode tabs 140 and 150 has a relatively broad width. That is, the electrode assembly 100 is curved based on the surface having a relatively broader width. Accordingly, a force exerted on the electrode assembly 100 is dispersed to prevent the electrode assembly 100 from being damaged. Thus, a capacity and a lifespan of the secondary battery 200 may be improved.

Here, the electrolyte may use a general liquid electrolyte or a solid electrolyte. However, when the solid electrolyte is used, the secondary battery 200 may be curved and then be thermally hardened.

That is, when the secondary battery 200 uses a polymer gel as the solid electrolyte, as described above, a prepolymer is accommodated with the electrode assembly 100 in the battery case 210 and is thermally hardened. According to the thermal hardening process, the prepolymer becomes a polymer gel. Here, the thermal hardening process may be performed after curving the electrode assembly 100. The polymer gel is a cross-linked polymer, and thus the secondary battery 200 increases in strength due to the polymer gel. Accordingly, the secondary battery 200 is not easily deformed by external impact and thus is stably used.

On the other hand, a problem may occur when the prepolymer is thermally hardened before the secondary battery 200 is curved. In detail, the thermally hardened polymer gel decreases in fluidity. Thus, the polymer gel may harden a surface of the electrode assembly 100 and surroundings thereof. That is, when the electrode assembly 100 is curved after the polymer gel is thermally hardened, the active material layers of the first plate and the second plate forming the electrode assembly 100 may peel off. The prepolymer is a solution before being thermally hardened. Thus, when the electrode assembly 100 is curved in the state of the prepolymer, the above peeling off problem or the like may be prevented.

A method of curing the secondary battery 200 may include pressing and thermally processing the secondary battery 200. Here, the pressing and the thermally processing may be performed at a temperature where the electrode assembly 100 accommodated in the secondary battery 200 and the electrode are minimally deteriorated. In particular, the pressing and the thermal processing may be performed at normal temperature without a heating process.

As described above, the secondary battery 200 according to the exemplary embodiments of the present invention is curved, and thus the electrode assembly 100 accommodated therein is also curved in the same shape as the secondary battery 200.

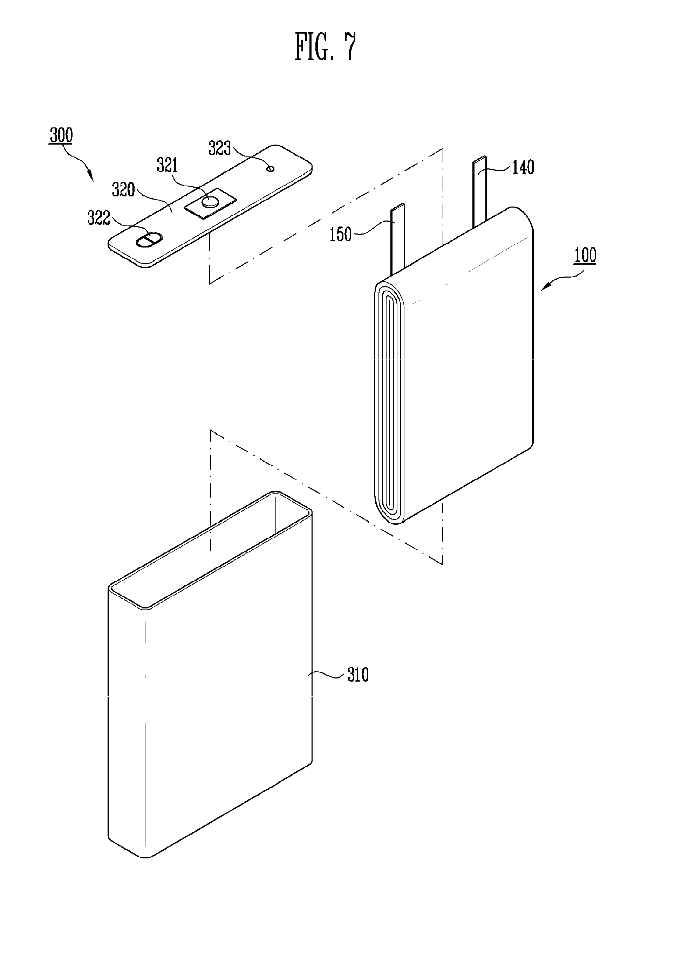

FIGS. 7 to 9 illustrate another exemplary embodiment of the present invention. FIG. 7 is an exploded view of an electrode assembly and a battery case accommodating the electrode assembly.

Referring to FIG. 7, a secondary battery 300 according to the present embodiment includes the battery case 310 having one open side, a cap assembly 320 to cover the open side, and the electrode assembly 100 accommodated in the battery case 310. The battery case 310 accommodates an electrolyte along with the electrode assembly 100 inside.

The electrode assembly 100 includes a first plate, a second plate, and a separator. The first plate may be a positive plate, and the second plate may be a negative plate. The separator is disposed between the plates to prevent direct contact between the plates to prevent a short circuit, and to function as a passage of ions. Further, a first electrode tab 140 is attached to a non-applied part of the first plate, and a second electrode tab 150 is attached to a non-applied part of the second plate. Through electrode tabs 140 and 150, the secondary battery 300 is electrically connected to the outside. Except for the above description, a configuration and operations of the electrode assembly 100 are the same as the electrode assembly 100 of FIG. 1, and thus descriptions thereof are omitted.

The secondary battery 300 of the present embodiment includes a prismatic battery case 310. The battery case 310 accommodates the electrode assembly 100 and a liquid or solid electrolyte, described above. The cap assembly 320 is assembled with an upper part of the battery case 310 and seals the open side of the battery case 310 so that the electrode assembly 100 is not detached from the battery case 310.

The cap assembly 320 seals the open side of the battery case 310. The cap assembly 320 includes a negative pin 321, a safety vent 322, and an electrolyte inlet 323 on a cap plate as a board.

The second electrode tab 150 is bent in a zigzag and is welded to a lower end of the negative pin 321. Further, the first electrode tab 140 is welded with the cap plate. Here, a method of coupling the first electrode tab 140 and the second electrode tab 150 includes resistance welding, laser welding, or the like, wherein resistance welding is generally used.

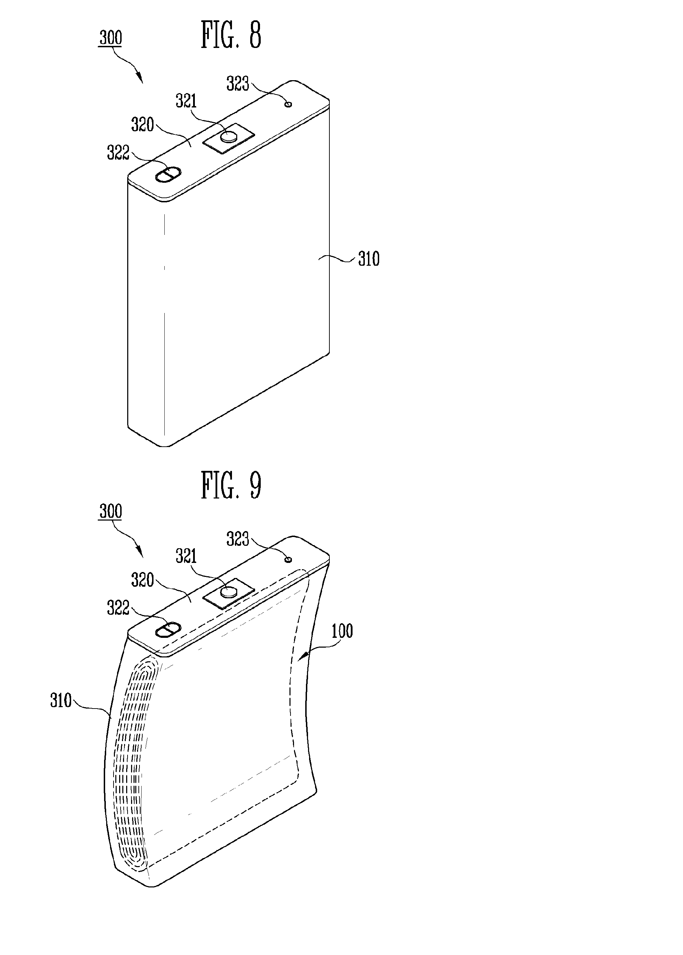

FIG. 8 is a perspective view of the secondary battery before having a curved shape according to the other exemplary embodiment of the present invention, and FIG. 9 is a lateral view of the secondary battery having a curved cross section vertical to a winding axis according to the other exemplary embodiment of the present invention.

Referring to FIG. 8, the battery case 310 accommodates the electrode assembly 100 and the electrolyte inside and is sealed by the cap assembly 320. In detail, an edge of the cap assembly 320 is welded with a corner of the open side of the battery case 310.

The secondary battery 300 shown in FIG. 8 is a hexahedron having flat external surfaces, generally described as prismatic. As described above, when the secondary battery 300 of FIG. 8 is mounted in a curved part of an electronic device, spatial use is inefficient. Thus, the secondary battery is formed to have a curved cross section vertical to the winding axis, ie. looking along the winding axis 160 (refer to FIG. 3A). In detail, in the secondary battery 300, the cap assembly 320 and a bottom side positioned corresponding to the cap assembly 320 look in the same direction. That is, both the cap assembly 320 and the bottom side are curved upwards or downward to look in the same direction based on a horizontal surface with respect to a central part.

As the secondary battery 300 is curved, the electrode assembly 100 accommodated in the secondary battery 300 is also curved in the same direction. Here, a curving direction of the electrode assembly 100 is the same as the winding direction of the electrode assembly 100. The electrode assembly 100 is curved based on a relatively broader width of the electrode assembly 100. As a width of a curved part becomes broader, a radius of curvature increases, and thus a force exerted on the plates may be dispersed. Accordingly, the first and second plates (refer to FIG. 2) are prevented from being broken.

A method of curving the secondary battery 300 may use a jig having a corresponding shape to a curved shape of the secondary battery 300. Here, heat processing is used along with the jig to ease curving. Here, the curving is performed under conditions where the electrolyte is minimally deteriorated. Except for the above description, the electrolyte and the method of curving the secondary battery are the same as described above with reference to FIG. 6, and thus descriptions thereof are omitted.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A secondary battery (200, 300) comprising:
a wound electrode assembly (100) that comprises a positive electrode (110), a negative electrode (120) and a separator (130) wound together around a winding axis (160);
a case (210, 310) for accommodating the electrode assembly and an electrolyte; and
first and second electrode tabs (140, 150) respectively formed on one end of the positive electrode and on one end of the negative electrode, wherein the case (210) and the electrode assembly (100) are curved in a winding direction of the electrode assembly, and the first and second electrode tabs (140, 150) extend from the respective ends of the positive and negative electrodes in a direction that is generally perpendicular to the winding axis (160) of the electrode assembly.

2. The secondary battery of claim 1, wherein the first and second electrode tabs (140, 150) lie along the curved path formed by the curvature of the case and the electrode assembly.

3. The secondary battery of claim 1 or 2, wherein the wound electrode assembly comprises first and second ends spaced apart from each other along the winding axis (160) and first and second sides spaced apart from each other along a line perpendicular to the winding axis, each of the first and second ends exposing edges of the positive and negative electrodes (110, 120), wherein the electrode assembly is curved between the first and second sides.

4. The secondary battery of any one of the preceding claims, wherein the case comprises a pouch.

5. The secondary battery of claim 4, wherein the pouch comprises a body (211) and a cover (212), the electrode tabs (140, 150) protruding between the body and the cover, wherein the cover (212) and the electrode tabs (140, 150) form a substantially continuous curved path to permit the battery to be mounted to a corresponding curved surface of an external device.

6. The secondary battery of claim 3, wherein the case comprises a can (310) having an opening at one end to receive the electrode assembly and a cap assembly (320) for sealing the opening, wherein the first and second ends of the electrode assembly face the sides of the can.

7. The secondary battery of claim 6, wherein the first and second electrode tabs (140, 150) extending from a side of the electrode assembly are connected to the cap assembly.

8. A method of manufacturing a secondary battery, comprising:
inserting a wound electrode assembly (100) into a case (210, 310), the wound electrode assembly comprising a positive electrode (110), a negative electrode (120) and a separator (130) disposed between the positive and negative electrodes, wherein first and second electrode tabs (140, 150) are respectively formed on one end of the positive electrode and on one end of the negative electrode and the first and second electrode tabs (140, 150) extend from the respective ends of the positive and negative electrodes in a direction that is perpendicular to the winding axis (160) of the electrode assembly; and
bending the case (210) and the electrode assembly (100) in a winding direction of the electrode assembly.

9. The method of claim 8, wherein the case comprises a pouch, further comprising providing a prepolymer in the pouch, bending the pouch and the electrode assembly and thermally hardening the prepolymer, whereby the prepolymer forms a polymer gel as a solid electrolyte.

10. The method of claim 8 or 9, comprising bending the case by pressing the case including the electrode assembly while heating to a predetermined temperature.

11. The method of any one of claims 8 to 10, further comprising forming the electrode assembly by:
providing elongate positive and negative electrode plates (110, 120);
forming respective first and second electrode tabs (140, 150) at one end of the positive and negative electrode plates, the electrode tabs extending longitudinally from the ends of the plates; and
winding the positive and negative electrode plates with the separator about the winding axis (160) such that the electrode tabs protrude beyond a side of the electrode assembly.
